# EUROPEAN PATENT SPECIFICATION

(11) **EP 4 332 470 B1**
(45) Date of publication and mention of the grant of the patent: **06.05.2026**
(21) Application number: 22794181.2
(22) Date of filing: 10.01.2022
(51) Int. Cl.: F04B 39/06, F04B 39/12, F25D 23/00

(54) **REFRIGERATION APPARATUS AND PRODUCTION METHOD THEREOF**
KÜHLVORRICHTUNG UND HERSTELLUNGSVERFAHREN DAFÜR
APPAREIL DE RÉFRIGÉRATION ET SON PROCÉDÉ DE PRODUCTION

(30) Priority: 28.04.2021 CN 202110465583
(43) Date of publication of application: 06.03.2024
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: WAN, Yanbin, Qingdao, Shandong 266101 (CN); CHEN, Jianquan, Qingdao, Shandong 266101 (CN); ZHU, Xiaobing, Qingdao, Shandong 266101 (CN)
(74) Representative: Winter, Brandl - Partnerschaft mbB
(86) International application number: PCT/CN2022/071043
(87) International publication number: WO 2022/227698

(56) References cited:
- EP-A1- 3 764 034
- CN-A- 106 839 605
- CN-A- 111 811 192
- CN-B- 107 514 858
- CN-B- 109 708 388
- CN-U- 203 274 205
- CN-U- 209 875 570
- CN-U- 209 893 707
- CN-U- 215 256 700
- JP-A- H06 213 552
- JP-A- H08 261 634
- KR-A- 20080 050 155

## Description

### TECHNICAL FIELD

The present invention relates to a refrigeration apparatus, and to a production method of the refrigeration apparatus.

### BACKGROUND

In a refrigeration apparatus, a compressor works on a refrigerant to realize circulation flow of the refrigerant for refrigeration, and noise is generated during working of the compressor; the compressor is provided in a compressor bin, other components, such as a fan, or the like, are generally arranged in the compressor bin and also generate noise, and these apparatuses generate heat while generating the noise, and are required to be cooled to guarantee normal working thereof. Therefore, a channel of the compressor bin communicated with the outside is necessary, and the noise generated by the compressor is also transmitted to the outside through the channel; a space inside the refrigeration apparatus is limited, and the internal limited space is occupied when a damping and noise reduction apparatus is added, such that inhibition of the noise of the refrigeration apparatus and space utilization cannot be well balanced and are difficult to consider at the same time, thus affecting a noise reduction effect, and then influencing use experiences of a user. CN 109 708 388 B relates to a compressor assembly and a refrigerator with the same. The compressor assembly includes a compressor, a fan, and an air passage, wherein the air passage is arranged between the fan and the compressor, the air passage includes a side plate and an air flow passage; the plurality of partitions are arranged in the air flow passage of the air passage, the anechoic chambers are formed between the plurality of partitions, and the plurality of anechoic chambers are mutually independent, so that the airflow generated by the fan enters the air flow passage, and is denoised through the plurality of anechoic chambers to obtain the refrigerator with lower operating noise and lower energy consumption. CN 111 811 192 A relates to refrigeration equipment, which comprises a bearing plate and at least one supporting and noise reducing component, wherein the bearing plate and at least one supporting and noise reducing component are positioned in a press cabin; the at least one supporting and noise reducing component is positioned between the lower surface of the bearing plate and the bottom wall of the press cabin and is used for supporting the bearing plate to the bottom wall of the press cabin; therefore, the bearing plate is stably supported above the bottom wall of the press cabin; a compressor is arranged on the bearing plate, so that a gravity function of the compressor for the bottom wall of the press cabin can be reduced, and an influence on the deformation of the press cabin is reduced; in addition, the supporting and noise reducing component is arranged between the bearing plate and the bottom wall of the press cabin, while the bearing plate is supported and is kept stable, the transferring of the vibration of the compressor to the bottom wall of the press cabin can be reduced, and the vibration noise of the compressor is effectively lowered. EP 3 764 034 A1 relates to a refrigerator with means for noise reduction. The refrigerator has a cabinet, at least one door and a plurality of refrigeration components. The cabinet defines an interior volume including at least one cooling compartment. The at least one door is carried by the cabinet and provides access to the interior volume. The plurality of refrigeration components includes a compressor, a condenser and a fan. The refrigerator additionally includes a component subassembly incorporating the plurality of refrigeration components and an airflow path extending between an inlet for colder air and an outlet for warmer air. The refrigeration components are located along the airflow path. The refrigerator further includes a noise reduction arrangement for reducing an operating noise of the refrigerator. The noise reduction arrangement includes a plurality of walls defining the airflow path. The walls include a noise absorbing material. The plurality of walls includes a plurality of external walls and a plurality of internal walls. The plurality of external walls defines an outer perimeter of the component subassembly and are oriented generally orthogonal to one another. The internal walls of the plurality of internal walls may be skewed relative to the external walls of the plurality of external walls. At least some of the walls of the plurality walls may be load-bearing walls. CN 209 875 570 U relates to a noise reduction device and a gas water heater. The noise reduction device comprises a barrel-shaped body which is defined by connecting a peripheral wall and a bottom wall and provided with an opening in one end. The peripheral wall comprises an inner peripheral wall and an outer peripheral wall; an air inlet channel is defined by the middle of the inner peripheral wall. A gap is formed between the inner peripheral wall and the outer peripheral wall; wherein the cavity is partitioned into a plurality of silencing cavities by first partition plates, at least one second partition plate is arranged in each silencing cavity, each silencing cavity is partitioned into a plurality of layers of sub-silencing cavities by the corresponding second partition plate, the sub-silencing cavities are mutually independent, the second partition plates are perpendicular to the first partition plates, and each sub-silencing cavity is provided with at least one sound inlet. According to the noise reduction device, noise entering the above structure is effectively absorbed, so that sound is effectively prevented from leaking out of the above structure, sound absorption and noise reduction for different frequencies can be achieved through the internal structure design, and the noise can be effectively prevented from being transmitted out of the body. In addition, the noise reduction structure basically has no influence on air volume, air pressure and the air inlet volume. CN 107 514 858 B relates to compressor bin for refrigerator, wherein a plurality of sharp corners of a wall plate of the compressor bin face to the inner part of the compressor bin, the sharp corners are hollow, the inner space of the sharp corners is filled with a foaming material, and a plurality of holes communicated with the inner space are formed in the sharp corners. The compressor bin can effectively remove highfrequency components of noise in the compressor bin and improve the sound quality of the noise, and is simple in structure, convenient to manufacture and low in cost.

Further relevant prior art document is KR20080050155A .

### SUMMARY

To solve noise reduction and space occupation problems in the prior art, an object of the present invention is to provide an improved refrigeration apparatus and a production method thereof. The invention is disclosed in the independent claims 1 and 10. Further embodiments are disclosed in the dependent claims.

To achieve the above object of the present invention, an embodiment of the present invention provides a refrigeration apparatus according to claim 1 comprising a compressor bin and a housing, wherein the compressor bin is provided in the housing, and a foaming space is provided between the compressor bin and the housing; after the silencing device is fixed in the foaming space, a foaming agent is injected into the foaming space. The refrigeration apparatus further comprises a silencing device provided in the foaming space, the compressor bin comprises an inner vent communicated with the outside, the housing comprising an outer vent opposite to the inner vent, the silencing device comprises a silencing channel, and the silencing channel is communicated with the inner vent and the outer vent.

As a further improvement of the present invention, each of a left side and a right side of the compressor bin is provided with the inner vent, as well as the silencing device and the outer vent corresponding to the inner vent, one inner vent is set as an air inlet, and the other inner vent is set as an air outlet.

As a further improvement of the present invention, the compressor bin comprises a cavity and side walls arranged on two sides of the cavity, the side walls are provided with the inner vents, the inner vents are communicated with the cavity, and the silencing devices are fixed on the side walls.

As a further improvement of the present invention, the side wall is provided with a plurality of first clamping parts, the silencing device comprises a silencing body and a plurality of second clamping parts arranged on a side of the silencing body facing the side wall and clamped to the first clamping parts, and the side wall is fixedly connected with the silencing device by a fastener.

As a further improvement of the present invention, the first clamping part comprises a clamping opening and a first clamping block, the second clamping part comprises a second clamping block and a clamping groove, the second clamping block is connected to the first clamping block through the clamping opening, and the first clamping block is fixed in the clamping groove.

As a further improvement of the present invention, a flow channel is provided between the silencing device and the housing and/or the side wall, and the flow channel is communicated with a part of the foaming space above the silencing device and a part of the foaming space below the silencing device.

As a further improvement of the present invention, the silencing device is hermetically connected with the housing, the silencing device comprises a silencing body and a protective part provided between the housing and the silencing body, and the protective part comprises a protective net transversely provided between the silencing channel and the outer vent; the protective part is clamped to a port of the silencing channel.

As a further improvement of the present invention, the silencing device comprises a plurality of silencing cavities, and the silencing cavities comprise openings towards the silencing channel.

As a further improvement of the present invention, at least two of the silencing cavities have different volumes.

To achieve the above object of the present invention, an embodiment of the present invention provides the refrigeration apparatus being configured as the above refrigeration apparatus, and the production method according to claim 10 comprises the following steps:
fixedly connecting the silencing device in the foaming space outside the compressor bin;
mounting the housing; and
injecting a foaming agent into the foaming space.

Compared with the prior art, the present invention has the following beneficial effects: a silencing device is provided in a foaming space, and since the foaming space unavoidably occupies some spaces, a space inside the refrigeration apparatus is not occupied when the foaming space is utilized, and a compressor bin is connected with the outside through a silencing channel, energy of sounds is weakened during outward heat dissipation of the compressor bin, and noise radiated outwards from the compressor bin is reduced, such that the solution realizes good balance between noise reduction and space utilization of the refrigeration apparatus, noise generated by the refrigeration apparatus is small, a space utilization rate is high, and use experiences of a user are improved greatly.

### BRIEF DESCRIPTION OF THE DRAWINGS

FIG. 1 is a schematic structural diagram of a compressor bin of a refrigerator according to an embodiment of the present invention;
FIG. 2 is a partially enlarged view at A in FIG. 1;
FIG. 3 is a schematic structural diagram of a silencing device in the embodiment of the present invention;
FIG. 4 is a partial sectional view of the compressor bin in the embodiment of the present invention; and
FIG. 5 is a schematic structural diagram of a refrigeration apparatus according to the embodiment of the present invention.

In the drawings: 100. refrigeration apparatus; 1. silencing device; 10. flow channel; 11. silencing body; 12. silencing channel; 13. second clamping part; 131. second clamping block; 132. clamping groove; 14. protective part; 141. protective net; 142. buckle; 15. silencing cavity; 151. opening; 2. compressor bin; 20. cavity; 21. side wall; 210. inner vent; 22. first clamping part; 221. clamping opening; 222. first clamping block; 3. housing; 31. outer vent; 4. fastener.

### DETAILED DESCRIPTION

Hereinafter, the present invention will be described in detail in conjunction with specific embodiments shown in the accompanying drawings. However, these embodiments have no limitations on the present invention, which is disclosed in the independent claims 1 and 10.

It should be understood that the terms expressive of spatial relative positions, such as "upper", "above", "lower", "below", or the like herein are used to describe the relationship of a unit or feature relative to another unit or feature in the drawings, for illustration and description. Terms expressive of the spatial relative positions are intended to include different orientations of the device in use or operation other than the orientations shown in the drawings.

The present invention provides a refrigeration apparatus according to claim 1 and a production method thereof according to claim 10, the refrigeration apparatus generates low noise, and meanwhile, an internal noise reduction device hardly occupies an available internal space, such that a space utilization rate is high, and use experiences of a user are greatly improved.

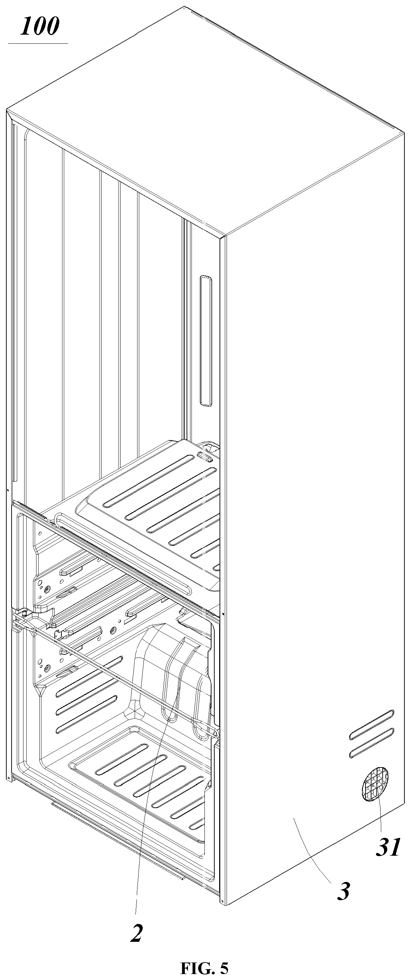

The refrigeration apparatus according to claim 1 in the present embodiment may be configured as a refrigerator, and as shown in FIG. 5, a refrigeration system is provided inside the refrigerator, the refrigeration system has a circulation loop for circulating a refrigerant, and the refrigeration system includes a compressor, a condenser, a throttling pipeline and an evaporator connected in series in sequence, the compressor is provided in a compressor bin 2, the compressor bin 2 may be located at any position of the refrigerator, such as a bottom, a middle, or a top, and the compressor bin 2 of FIG. 5 in the present embodiment is located at the bottom of the refrigerator.

In the present embodiment, noise radiated outwards from the compressor bin 2 is improved to solve a noise problem in a prior art.

To clearly express the position and direction described in the present embodiment, in the present embodiment, the up-down direction can be defined by substantially referring to the direction of gravity when the refrigerator is placed on a horizontal floor, and since the compressor bin 2 is provided inside the refrigerator, the direction from the back of the refrigerator towards the refrigerator cabinet serves as the rear, the rear of the refrigerator serves as the front, and both sides perpendicular to the front-rear direction serve as the left and right.

A refrigeration apparatus 100 according to the present embodiment includes a compressor bin 2 and a housing 3, the compressor bin 2 is provided in the housing 3, a foaming space is provided between the compressor bin 2 and the housing 3, the housing 3 serves as a shell of the refrigerator in FIG. 5, the refrigerator is further internally provided with an inner liner, the foaming space is formed outside the inner liner and the compressor bin 2 and located on an inner side of the housing 3, a foaming agent is injected into the foaming space to achieve a heat insulation effect, and the foaming space generally has a certain thickness to achieve the heat insulation effect. The compressor bin 2 includes side walls 21 arranged on left and right sides, a back plate, a bottom plate, a cover plate, or the like, which jointly enclose a cavity 20 of the compressor bin 2, and a compressor, a condenser, a fan, a water pan, or the like, are arranged in the cavity 20. The compressor bin 2 includes an inner vent 210 communicated with the outside, the housing 3 includes an outer vent 31 opposite to the inner vent 210, and heat in the cavity 20 is discharged outwards through the two vents.

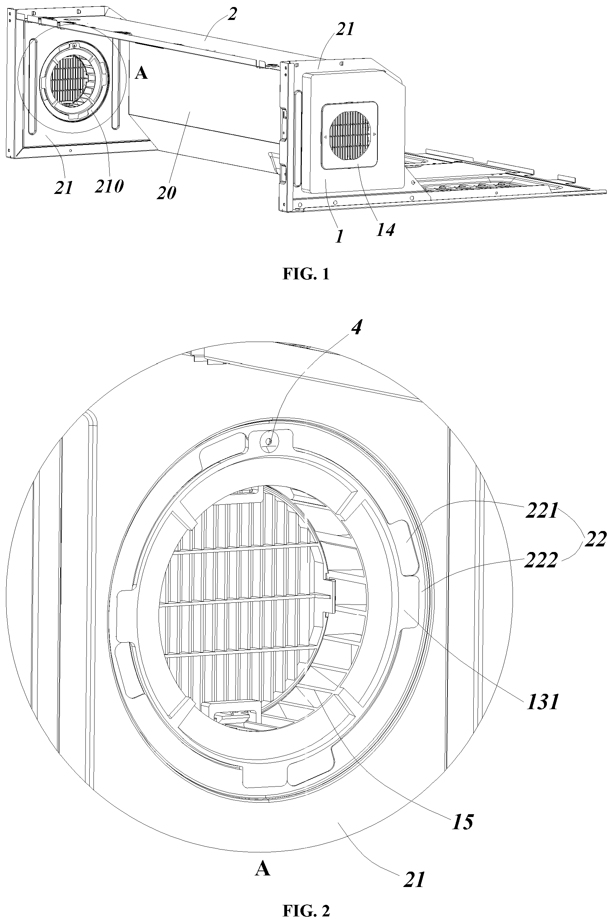

The refrigeration apparatus 100 according to claim 1 further includes a silencing device 1 provided in the foaming space, and as shown in FIGS. 1 to 4, the silencing device 1 is configured to reduce the noise emitted from the cavity 20, the silencing device 1 includes a silencing channel 12, and the silencing channel 12 communicates the inner vent 210 and the outer vent 31; preferably, the cavity 20 is communicated with the outside only through the silencing channel 12; that is, the compressor bin 2 is not directly communicated with the outside through other ways, and since the foaming space has to occupy some spaces, mounting of the silencing device 1 at this position has the following several effects.
Firstly, the silencing device 1 does not occupy a space in the inner liner or the compressor bin 2 any longer, such that a utilization rate of the space in the compressor bin 2 is higher, a structure can be made more compact, the space of the inner liner can be made larger, and an effective utilization rate of the refrigerator is higher; when the user considers a smaller occupied area and a larger storage space of the refrigerator, this point becomes a favorable selling point of the refrigerator, a sales volume of the refrigerator is increased, and the use experiences of the user are improved;
secondly, a spatial position occupied by the silencing device 1 is a position where the compressor bin 2 is communicated with the outside for heat dissipation, the heat in the compressor bin 2 is required to be dissipated at this position, and the heat dissipation of the compressor bin 2 is affected by foaming at the position in an existing refrigerator. In the present embodiment, after the silencing device 1 is provided at this position, a foaming material filled at the position is reduced, such that the heat in the compressor bin 2 is more favorably dissipated outwards from the position, and temperature reduction of the compressor bin 2 is facilitated;
thirdly, the foaming material has a fixing function, and after the foaming material is injected into the foaming space, the foaming material is solidified to tightly fix the silencing device 1 at this position, thus reducing vibration of the silencing device 1; the silencing device 1 has a noise reduction function, such that it is necessary to stably fix the silencing device 1; the compressor is configured as a rotating machine and generates vibration in a working process, the compressor is fixed on the bottom plate of the compressor bin 2 and drives the whole compressor bin 2 to vibrate in the working process, and when the silencing device 1 is fixed in the compressor bin 2, the silencing device cannot be stably fixed compared with the arrangement in the foaming space, and after a long time, the silencing device 1 may loosen under the long-term vibration; when the silencing device 1 is provided in the foaming space and fixed by the foaming material, the foaming material has a vibration absorbing function and firmly fixes the silencing device 1, the noise reduction effect is greatly improved, and a stable state is kept for a long time;
fourthly, a space structure design of the existing compressor bin 2 is not affected, and the silencing device 1 can be mounted without changing the space structure design, a heat dissipation design, a mechanical strength design and an internal wiring design of the compressor bin 2, the whole size of the refrigerator, or the like. Since the position of the silencing device 1 and the existing designs have no spatial interference relationship or have a quite small relationship, without greatly adjusting the existing structure, by little changing a production process, production parameters, die designs, or the like, the refrigeration apparatus 100 with the silencing device 1 can be transformed on the basis of the existing refrigeration apparatus 100, thereby greatly reducing a production cost;
fifthly, the noise reduction effect is good, a specific structure of the silencing device 1 is described below, a sound enters the silencing device 1 and then is transmitted along the silencing channel 12, a plurality of silencing cavities 15 are formed in the side wall 21 of the silencing channel 12, and at least part of the sound enters the silencing cavities 15, such that a propagation path of the sound passing through a through hole is increased, energy of the sound radiated outwards is reduced, and the noise reduction effect is achieved; a volume of the silencing cavity 15 can determine a frequency range of the sound capable of being eliminated by the silencing cavity 15, the silencing cavities 15 with different volumes have different silencing frequency ranges, and therefore, the sound can enter different silencing cavities 15 by adjusting the volumes of different silencing cavities 15, so as to eliminate the noise with different frequencies, such that the silencing device 1 has wider silencing frequencies.

Further, as shown in FIG. 1, each of the left and right sides of the compressor bin 2 is provided with the inner vent 210, as well as the silencing device 1 and the outer vent 31 corresponding to the inner vent 210, one inner vent 210 is set as an air inlet, the other inner vent 210 is set as an air outlet, the compressor bin 2 includes the cavity 20 and the side walls 21 provided on both sides of the cavity 20, the refrigeration apparatus 100 according to claim 1 includes the compressor provided in the cavity 20, the side walls 21 are provided with the inner vents 210, the inner vents 210 are communicated with the cavity 20, and the silencing devices 1 are fixed on the side walls 21. The silencing devices 1 are arranged on the side walls 21 of the left and right sides of the existing compressor bin 2, and as shown in FIG. 1, when entering and exiting from the cavity 20, air flow passes through the silencing devices 1, such that the noise which is directly propagated outwards at the air flow inlet and outlet is reduced while an entrance and an exit of the air flow are facilitated.

Specifically, the side wall 21 is provided with a plurality of first clamping parts 22, the silencing device 1 includes a silencing body 11 and a plurality of second clamping parts 13 which are arranged on a side of the silencing body 11 facing the side wall 21 and clamped to the first clamping parts 22, and the side wall 21 is fixedly connected with the silencing device 1 by a fastener 4. The side wall and the silencing device are relatively fixed in a clamped manner and then tightly fixed by the fastener 4, and the reason is as follows: the fastener 4, such as a bolt and a screw, can only fix certain points generally, but a sealing performance at this position is important, and when the sealing performance is not good, the foaming material can enter the cavity 20 of the compressor bin 2 through a gap, such that the first clamping part 22 and the second clamping part 13 are connected in the clamped manner, the first clamping part 22 and the second clamping part 13 can be both annular, or be arranged around a circumference of the inner vent 210, so as to ensure that the whole circumference can be sealed and fixed.

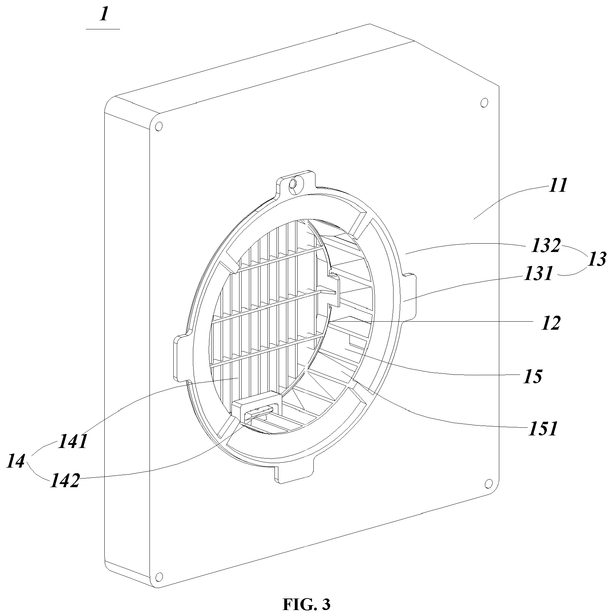

The inner vent 210 and the outer vent 31 may be circular, such that the first clamping part 22 and the second clamping part 13 may be distributed in a circular ring shape, as shown in FIGS. 2 and 3. The first clamping part 22 includes a clamping opening 221 and a first clamping block 222, the second clamping part 13 includes a second clamping block 131 and a clamping groove 132, and a plurality of groups (for example, four groups in the drawing) of clamping openings 221 and first clamping blocks 222 are arranged around the circumference of the inner vent 210; a plurality of groups (for example, four groups in the drawing) of second clamping blocks 131 and clamping grooves 132 are also correspondingly arranged around the circumference, the second clamping block 131 is connected to the first clamping block 222 through the clamping opening 221, and the first clamping block 222 is fixed in the clamping groove 132, so as to fixedly connect the silencing device 1 and the side wall 21 together.

During mounting, the first clamping block 222 of the silencing device 1 is inserted into the cavity 20 through the clamping opening 221 of the side wall 21 first, and then, the silencing device 1 is rotated to a certain angle to allow the first clamping block 222 of the side wall 21 to be clamped into the clamping groove 132 of the silencing device 1, and the clamping groove 132 is configured as a groove body formed between the second clamping block 131 and the silencing body 11, and therefore, fixed connection around the whole circumference is performed; after mounting is in place, the silencing device 1 and the side wall 21 are tightly connected by the fastener 4 to avoid separation thereof.

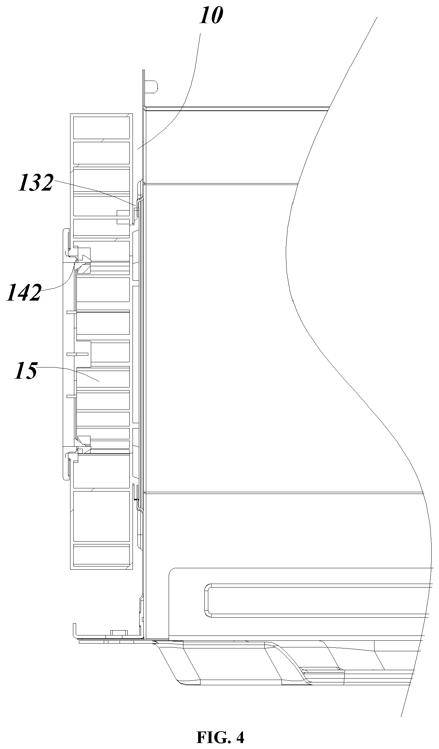

A flow channel 10 is provided between the silencing device 1 and the housing 3 and/or the side wall 21, and as shown in FIG. 4, the flow channel 10 is communicated with a part of the foaming space above the silencing device 1 and a part of the foaming space below the silencing device, and when the foaming agent is injected into the foaming space, the foaming material enters the lower part or the upper part through the flow channel 10, thus avoiding that due to the arrangement of the silencing device 1, flowing of the foaming agent is blocked at this position, and the heat insulation performance in other parts of the foaming space is influenced.

Further, the silencing device 1 is hermetically connected with the housing 3, the silencing device 1 includes the silencing body 11 and a protective part 14 provided between the housing 3 and the silencing body 11, and as shown in FIGS. 1 to 3, the protective part 14 includes a protective net 141 transversely provided between the silencing channel 12 and the outer vent 31; the protective part 14 is clamped to a port of the silencing channel 12, the protective part 14 is configured to prevent external insects, mice, or the like, from entering the cavity 20, and does not affect the entrance and exit of the air flow, and the protective part 14 is provided with a buckle 142 and clamped to the silencing body 11, such that assembly is convenient.

Further, the silencing device 1 includes the plurality of silencing cavities 15 provided on the path of the silencing channel 12, the silencing cavities 15 include openings 151 facing the silencing channel 12, and the volumes of at least two silencing cavities 15 are different. At least part of the sound enters the silencing cavity 15 through the opening 151, the silencing cavity 15 has a certain depth, and the sound enters the opening 151 and then is propagated inside the silencing cavity 15, such that the propagation path of the sound during passing through the through hole is prolonged, and the noise reduction effect is achieved by providing an acoustic metamaterial. The volume of the silencing cavity 15 can determine a frequency range of the sound capable of being eliminated by the silencing cavity 15; that is, different silencing cavities 15 have different silencing frequency ranges, and therefore, the sound can enter different openings 151 by adjusting the volumes of different silencing cavities 15, so as to eliminate the noise with different frequencies, such that the silencing device 1 has wider silencing frequencies.

Further, an embodiment of the present invention provides an assembling method according to claim 10 of the refrigeration apparatus 100, including the following steps:
fixedly connecting the silencing device 1 in the foaming space outside the compressor bin 2;
mounting the housing 3; and
injecting the foaming agent into the foaming space.

That is, after the silencing device 1 is fixed in the foaming space, the foaming agent is injected into the foaming space, such that the foaming agent firmly fixes the silencing device 1 in the foaming space, and the beneficial effect of the above relevant content that the foaming material has a fixing function is achieved.

Compared with the prior art, the present embodiment has the following beneficial effects:
A silencing device is provided in a foaming space, and since the foaming space unavoidably occupies some spaces, a space inside the refrigeration apparatus is not occupied when the foaming space is utilized, and a compressor bin is connected with the outside through a silencing channel, energy of sounds is weakened during outward heat dissipation of the compressor bin, and noise radiated outwards from the compressor bin is reduced, such that the solution realizes good balance between noise reduction and space utilization of the refrigeration apparatus, noise generated by the refrigeration apparatus is small, a space utilization rate is high, and use experiences of a user are improved greatly.

It should be understood that although the present specification is described based on embodiments, not every embodiment contains only one independent technical solution. Such a narration way of the present specification is only for the sake of clarity. Those skilled in the art should take the present specification as an entirety. The technical solutions in the respective embodiments may be combined properly to form other embodiments which may be understood by those skilled in the art, as long as they are in accordance with the following claims.

A series of the detailed descriptions set forth above is merely specific description of feasible embodiments of the present invention, and is not intended to limit the protection scope of the present invention, which is disclosed in the following claims. Modifications made by persons skilled in the art according to these embodiments shall fall within the protection scope of the appended claims.

## Claims

1. A refrigeration apparatus (100), comprising a compressor bin (2) and a housing (3), wherein the compressor bin (2) is provided in the housing (3), wherein a foaming space is provided between the compressor bin (2) and the housing (3); the refrigeration apparatus (100) further comprises a silencing device (1), wherein the compressor bin (2) comprises an inner vent (210) communicated with the outside, the housing (3) comprises an outer vent (31) opposite to the inner vent (210), the silencing device (1) comprises a silencing channel (12), and the silencing channel (12) is communicated with the inner vent (210) and the outer vent (31), **characterized in that** the silencing device (1) is provided in the foaming space outside the compressor bin (2), wherein after the silencing device (1) is fixed in the foaming space, a foaming agent is injected into the foaming space.

2. The refrigeration apparatus (100) according to claim 1, wherein each of the left side and the right side of the compressor bin (2) is provided with the inner vent (210), wherein the silencing device (1) and the outer vent (31) are corresponding to the inner vent (210), wherein one inner vent (210) is set as an air inlet, and the other inner vent (210) is set as an air outlet.

3. The refrigeration apparatus (100) according to claim 2, wherein the compressor bin (2) comprises a cavity (20) and side walls (21) arranged on two sides of the cavity (20), the side walls (21) are provided with the inner vents (210), the inner vents (210) are communicated with the cavity (20), and a plurality of silencing devices (1) is fixed on the side walls (21).

4. The refrigeration apparatus (100) according to claim 3, wherein a side wall (21) is provided with a plurality of first clamping parts (22), the silencing device (1) comprises a silencing body (11) and a plurality of second clamping parts (13) arranged on a side of the silencing body (11) facing the side wall (21) and clamped to the first clamping parts (22), and the side wall (21) is fixedly connected with the silencing device (1) by a fastener (4).

5. The refrigeration apparatus (100) according to claim 4, wherein the first clamping part (22) comprises a clamping opening (221) and a first clamping block (222), the second clamping part (13) comprises a second clamping block (131) and a clamping groove (132), the second clamping block (131) is connected to the first clamping block (222) through the clamping opening (221), and the first clamping block (222) is fixed in the clamping groove (132).

6. The refrigeration apparatus (100) according to claim 3, wherein a flow channel (10) is provided between the silencing device (1) and the housing (3) and/or the side wall (21), and the flow channel (10) is communicated with a part of the foaming space above the silencing device (1) and a part of the foaming space below the silencing device (1).

7. The refrigeration apparatus (100) according to claim 3, wherein the silencing device (1) is hermetically connected with the housing (3), the silencing device(1) comprises a silencing body (11) and a protective part (14) provided between the housing (3) and the silencing body (11), and the protective part (14) comprises a protective net (141) transversely provided between the silencing channel (12) and the outer vent (31); the protective part (14) is clamped to a port of the silencing channel (12).

8. The refrigeration apparatus (100) according to claim 1, wherein the silencing device (1) comprises a plurality of silencing cavities, and the silencing cavities comprise openings (151) towards the silencing channel (12).

9. The refrigeration apparatus (100) according to claim 8, wherein at least two of the silencing cavities have different volumes.

10. A production method of a refrigeration apparatus (100), wherein the refrigeration apparatus (100) is configured as the refrigeration apparatus (100) according to claim 1, and the production method comprises the following steps:
fixedly connecting the silencing device (1) in the foaming space outside the compressor bin (2);
mounting the housing (3); and
injecting a foaming agent into the foaming space.

## Patentansprüche

1. Kühlvorrichtung (100) mit einem Kompressorraum (2) und einem Gehäuse (3), wobei der Kompressorraum (2) im Gehäuse (3) angeordnet ist, wobei
zwischen dem Kompressorraum (2) und dem Gehäuse (3) ein Schaumraum vorgesehen ist; die Kühlvorrichtung (100) ferner eine Schalldämpfungsvorrichtung (1) aufweist, wobei der Kompressorraum (2) eine innere Lüftungsöffnung (210) aufweist, die mit der Umgebung in Verbindung steht, das Gehäuse (3) eine äußere Lüftungsöffnung (31) aufweist, die der inneren Lüftungsöffnung (210) gegenüberliegt, die Schalldämpfungsvorrichtung (1) einen Schalldämpfungskanal (12) aufweist, und der Schalldämpfungskanal (12) mit der inneren Lüftungsöffnung (210) und der äußeren Lüftungsöffnung (31) in Verbindung steht, **dadurch gekennzeichnet, dass** die Schalldämpfungsvorrichtung (1) in dem Schaumraum außerhalb des Kompressorraums (2) vorgesehen ist, wobei nach dem Befestigen der Schalldämpfungsvorrichtung (1) im Schaumraum ein Schaummittel in den Schaumraum eingespritzt wird.

2. Kühlvorrichtung (100) nach Anspruch 1, wobei sowohl die linke als auch die rechte Seite des Kompressorraums (2) mit der inneren Lüftungsöffnung (210) versehen ist, wobei die Schalldämpfungsvorrichtung (1) und die äußere Lüftungsöffnung (31) der inneren Lüftungsöffnung (210) zugeordnet sind, wobei eine innere Lüftungsöffnung (210) als ein Lufteinlass ausgebildet ist und die andere innere Lüftungsöffnung (210) als ein Luftauslass ausgebildet ist.

3. Kühlvorrichtung (100) nach Anspruch 2, wobei der Kompressorraum (2) einen Hohlraum (20) und an zwei Seiten des Hohlraums (20) angeordnete Seitenwände (21) aufweist, wobei die Seitenwände (21) mit den inneren Lüftungsöffnungen (210) versehen sind, die inneren Lüftungsöffnungen (210) mit dem Hohlraum (20) in Verbindung stehen und eine Mehrzahl von Schalldämpfungsvorrichtungen (1) an den Seitenwänden (21) befestigt ist.

4. Kühlvorrichtung (100) nach Anspruch 3, wobei eine Seitenwand (21) mit einer Mehrzahl von ersten Klemmteilen (22) versehen ist, die Schalldämpfungsvorrichtung (1) einen Schalldämpfungskörper (11) und eine Mehrzahl von zweiten Klemmteilen (13) aufweist, die an einer der Seitenwand (21) zugewandten Seite des Schalldämpfungskörpers (11) angeordnet sind und mit den ersten Klemmteilen (22) in Eingriff stehen, und die Seitenwand (21) über ein Befestigungselement (4) mit der Schalldämpfungsvorrichtung (1) fest verbunden ist.

5. Kühlvorrichtung (100) nach Anspruch 4, wobei das erste Klemmteil (22) eine Klemmöffnung (221) und einen ersten Klemmblock (222) aufweist, das zweite Klemmteil (13) einen zweiten Klemmblock (131) und eine Klemmnut (132) aufweist, der zweite Klemmblock (131) über die Klemmöffnung (221) mit dem ersten Klemmblock (222) verbunden ist und der erste Klemmblock (222) in der Klemmnut (132) befestigt ist.

6. Kühlvorrichtung (100) nach Anspruch 3, wobei zwischen der Schalldämpfungsvorrichtung (1) und dem Gehäuse (3) und/oder der Seitenwand (21) ein Strömungskanal (10) vorgesehen ist und der Strömungskanal (10) mit einem Teil des Schaumraums oberhalb der Schalldämpfungsvorrichtung (1) und einem Teil des Schaumraums unterhalb der Schalldämpfungsvorrichtung (1) in Verbindung steht.

7. Kühlvorrichtung (100) nach Anspruch 3, wobei die Schalldämpfungsvorrichtung (1) hermetisch mit dem Gehäuse (3) verbunden ist, die Schalldämpfungsvorrichtung (1) einen Schalldämpfungskörper (11) und ein Schutzteil (14) aufweist, das zwischen dem Gehäuse (3) und dem Schalldämpfungskörper (11) vorgesehen ist, und das Schutzteil (14) ein Schutznetz (141) aufweist, das quer zwischen dem Schalldämpfungskanal (12) und der äußeren Lüftungsöffnung (31) vorgesehen ist; und das Schutzteil (14) an einem Anschluss des Schalldämpfungskanals (12) festgeklemmt ist.

8. Kühlvorrichtung (100) nach Anspruch 1, wobei die Schalldämpfungsvorrichtung (1) eine Mehrzahl von Schalldämpfungshohlräumen aufweist und die Schalldämpfungshohlräume Öffnungen (151) zum Schalldämpfungskanal (12) hin aufweisen.

9. Kühlvorrichtung (100) nach Anspruch 8, wobei mindestens zwei der Schalldämpfungshohlräume unterschiedliche Volumina aufweisen.

10. Herstellungsverfahren einer Kühlvorrichtung (100), wobei die Kühlvorrichtung (100) als die Kühlvorrichtung (100) nach Anspruch 1 ausgebildet ist und das Herstellungsverfahren die folgenden Schritte umfasst:
festes Verbinden der Schalldämpfungsvorrichtung (1) im Schaumraum außerhalb des Kompressorraums (2);
Montieren des Gehäuses (3); und
Einspritzen eines Schaummittels in den Schaumraum.

## Revendications

1. Appareil de réfrigération (100), comprenant un compartiment de compresseur (2) et un boîtier (3), dans lequel le compartiment de compresseur (2) est disposé dans le boîtier (3), dans lequel
un espace moussant est prévu entre le compartiment du compresseur (2) et le boîtier (3) ; l'appareil de réfrigération (100) comprend en outre un dispositif d'insonorisation (1), dans lequel le compartiment du compresseur (2) comprend un évent intérieur (210) communiquant avec l'extérieur, le boîtier (3) comprend un évent extérieur (31) opposé à l'évent intérieur (210), le dispositif d'insonorisation (1) comprend un canal d'insonorisation (12), et le canal d'insonorisation (12) communique avec l'évent intérieur (210) et l'évent extérieur (31), **caractérisé en ce que** le dispositif d'insonorisation (1) est disposé dans l'espace moussant à l'extérieur du compartiment du compresseur (2), dans lequel, après que le dispositif d'insonorisation (1) soit fixé dans l'espace moussant, un agent moussant est injecté dans l'espace moussant.

2. Appareil de réfrigération (100) selon la revendication 1, dans lequel chacun des côtés gauche et droit du compartiment du compresseur (2) est muni de l'évent intérieur (210),
dans lequel le dispositif d'insonorisation (1) et l'évent extérieur (31) correspondent à l'évent intérieur (210), dans lequel un évent intérieur (210) est configuré comme une entrée d'air et l'autre évent intérieur (210) est configuré comme une sortie d'air.

3. Appareil de réfrigération (100) selon la revendication 2, dans lequel le compartiment du compresseur (2) comprend une cavité (20) et des parois latérales (21) agencées de deux côtés de la cavité (20), les parois latérales (21) sont munies d'évents intérieurs (210), les évents intérieurs (210) communiquent avec la cavité (20), et une pluralité de dispositifs d'insonorisation (1) est fixée sur les parois latérales (21).

4. Appareil de réfrigération (100) selon la revendication 3, dans lequel une paroi latérale (21) est munie d'une pluralité de premières parties de serrage (22), le dispositif d'insonorisation (1) comprend un corps d'insonorisation (11) et une pluralité de secondes parties de serrage (13) agencées sur un côté du corps d'insonorisation (11) faisant face à la paroi latérale (21) et serrées aux premières parties de serrage (22), et la paroi latérale (21) est fixée de manière fixe au dispositif d'insonorisation (1) par une fixation (4).

5. Appareil de réfrigération (100) selon la revendication 4, dans lequel la première partie de serrage (22) comprend une ouverture de serrage (221) et un premier bloc de serrage (222), la seconde partie de serrage (13) comprend un second bloc de serrage (131) et une rainure de serrage (132), le second bloc de serrage (131) est relié au premier bloc de serrage (222) par l'ouverture de serrage (221), et le premier bloc de serrage (222) est fixé dans la rainure de serrage (132).

6. Appareil de réfrigération (100) selon la revendication 3, dans lequel un canal d'écoulement (10) est prévu entre le dispositif d'insonorisation (1) et le boîtier (3) et/ou la paroi latérale (21) et le canal d'écoulement (10) communiquent avec une partie de l'espace moussant au-dessus du dispositif d'insonorisation (1) et une partie de l'espace moussant en dessous du dispositif d'insonorisation (1).

7. Appareil de réfrigération (100) selon la revendication 3, dans lequel le dispositif d'insonorisation (1) est relié hermétiquement au boîtier (3), le dispositif d'insonorisation (1) comprend un corps d'insonorisation (11) et une partie de protection (14) disposée entre le boîtier (3) et le corps d'insonorisation (11), et la partie de protection (14) comprend un filet de protection (141) disposé transversalement entre le canal d'insonorisation (12) et l'évent extérieur (31) ; la partie de protection (14) est fixée à un orifice du canal d'insonorisation (12).

8. Appareil de réfrigération (100) selon la revendication 1, dans lequel le dispositif d'insonorisation (1) comprend une pluralité de cavités d'insonorisation, et les cavités d'insonorisation comprennent des ouvertures (151) vers le canal d'insonorisation (12).

9. Appareil de réfrigération (100) selon la revendication 8, dans lequel au moins deux des cavités d'insonorisation présentent des volumes différents.

10. Procédé de production d'un appareil de réfrigération (100), dans lequel l'appareil de réfrigération (100) est configuré comme l'appareil de réfrigération (100) selon la revendication 1, et le procédé de production comprend les étapes suivantes :
relier de manière fixe le dispositif d'insonorisation (1) dans l'espace moussant à l'extérieur du bac du compresseur (2) ;
monter le boîtier (3) ; et
injecter un agent moussant dans l'espace moussant.
